(19) Europäisches Patentamt
European Patent Office
Office européen des brevets

(11) Publication number: 0 129 858
B1

(12) EUROPEAN PATENT SPECIFICATION

(45) Date of publication of patent specification: 14.12.88

(51) Int. Cl.⁴: C 08 L 75/04, C 08 L 83/12, C 08 K 3/36

(21) Application number: 84107135.0

(22) Date of filing: 21.06.84

# (54) Thixotropic polyurethane resin composition.

(30) Priority: 22.06.83 JP 113383/83

(43) Date of publication of application: 02.01.85 Bulletin 85/01

(45) Publication of the grant of the patent: 14.12.88 Bulletin 88/50

(84) Designated Contracting States: CH DE FR GB IT LI

(56) References cited:
DD-A- 138 777
GB-A-1 203 693

PATENT ABSTRACTS OF JAPAN, vol. 8, no. 122 (C-227)1559r, 08 June 1984
PATENT ABSTRACTS OF JAPAN, vol. 8, no. 241 (C-250)1678r, 06 November 1984

(73) Proprietor: Takeda Chemical Industries, Ltd.
27, Doshomachi 2-chome Higashi-ku
Osaka-shi Osaka, 541 (JP)

(72) Inventor: Nishino, Kenichi
13-67, Shimohozumi 3-chome
Ibaraki Osaka 567 (JP)
Inventor: Kobayashi, Atsuo
25-4, Kurakuen 4-bancho
Nishinomiya Hyogo 662 (JP)
Inventor: Higashi, Sachio
10-6, Senriyama-tsukigaoka
Suita Osaka 565 (JP)
Inventor: Yamamoto, Shinichiro
3846-3, Kaibara Kaibara-cho
Hikami-gun Hyogo 669-33 (JP)

(74) Representative: von Kreisler, Alek, Dipl.-Chem. et al
Deichmannhaus am Hauptbahnhof
D-5000 Köln 1 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to novel thixotropic polyurethane resin compositions.

In recent years, polyurethanes, because of their excellent rubbery elasticity, weatherability, abrasion resistance, etc., have widely been used in a great variety of fields as elastomers, coatings, sealants, flooring materials, water-proofing materials, walling materials, synthetic or artificial leather and adhesives.

When polyurethanes are used in these application fields, they are utilized as self-levelling type resin or thixotropic resin according to their intended application fields. In particular, sealing compounds and walling materials, water proofing materials, etc. which are to be worked on vertical or slanting surfaces are used as thixotropic resins to prevent them from slumping and running.

As the method of producing such thixotropic polyurethane resin compositions, several proposals have already been made. For example, Japanese Patent Publication No. 41110/70 (corresponding to GB—A—1,203,693) proposes thixotropic polyurethane resin compositions which are obtained by combination of a polyurethane prepolymer with colloidal silica and a polyoxyethylene glycol derivative; Japanese Patent Publication No. 7632/72 discloses the production of thixotropic polyurethane resin compositions by combining a polyurethane prepolymer with a large amount of inorganic fillers and a polyoxyalkylene compound; and Japanese Patent Publication No. 11656/76 describes the preparation of thixotropic polyurethane resin compositions by combining a polyurethane prepolymer with a block copolymer from ethylene oxide and propylene oxide and finely powdered silica, etc. Nevertheless thixotropic polyurethane resin compositions proposed so far lose their thixotropy and never restore it, when they are admixed with other components, for example, organometallic catalyst such as lead octylate and dibutyltin dilaureate and calcium carbonate and kneaded with a conventionally employed mixer such as high-speed disper, planetary mixer and butterfly mixer. Accordingly, when thixotropic urethane polymers or their compounded products such as one-package type sealants are produced on an industrial scale according to such methods, there have been encountered difficulties in supplying invariably stable products due to fluctuations in the product quality.

In view of the above situations, the present inventors conducted intensive research in order to impart by far improved thixotropy to fluid polyurethane compositions, and as a result, found that the polyurethane resin compositions which comprise a polyurethane prepolymer in the form of liquid or solution being admixed as the essential components with colloidal silica and a siloxane compound having a polyoxyethylene chain in the molecule exhibit outstandingly excellent thixotropy. Surprisingly, the thixotropy of the polyurethane resin compositions of the present invention is not affected adversely even by addition of a solvent in a variety of kinds, plasticizers, inorganic fillers, pigments, ultraviolet absorbers, antioxidants and amine or organic metal based catalysts as conventionally used in the urethane industry and the thixotropy is in no way lost, even after such solvents and additives are added and kneaded as the case may be. In addition, it has turned out that the thixotropy to be achieved according to the present invention is not lost even after the kneading in three roll kneader, planetary mixer, disper, butterfly mixer, etc. which are normally utilized for kneading, and thus can provide the ideal thixotropic polyurethane resin compositions.

Thus, the present invention relates to the thixotropic polyurethane resin compositions which comprise a polyurethane prepolymer in the form of liquid or solution, colloidal silica and a siloxane compound having a polyoxyethylene chain in its molecule.

The polyurethane prepolymers, one of the basic materials in the present composition have a relatively low molecular weight, ranging from an average molecular weight of from 500 to 10,000, and are formed by polymerization of polyisocyanates and active hydrogen compounds to be described hereinafter at the equivalent ratio of NCO group to active hydrogen group ranging preferably from 1.02:1.0 to 5.0:1.0, more preferably from 1.1:1.0 to 3.0:1.0. These prepolymers take the form of a liquid by nature or a solution formed by dissolution in a solvent. Such solvent includes esters such as ethyl acetate, butyl acetate and amyl acetate, ketones such as acetone, methyl ethyl ketone and methyl isobutyl ketone, aromatic hydrocarbons such as toluene, benzene and xylene, ethers such as tetrahydrofuran and dioxane, substituted acid amides such as N,N'-dimethylformamide and N,N'-dimethylacetamide, or dimethylsulfoxide, and so forth. By "polyisocyanate" which is a constituent of the above-mentioned prepolymer are denoted compounds having not less than two NCO groups in one molecule, and such compounds include, for example, 2,4- and 2,6-tolylene diisocyanates, m- and p-phenylene diisocyanates, 1-chlorophenylene-2,4-diisocyanate, m- and p-phenylene diisocyanates, 1-chlorophenylene-2,4-diisocyanate, 1,5-naphthalene diisocyanate, 3,3'-bis toluene-4,4'-diisocyanate, methylene-bisphenylene-4,4'-diisocyanate, tetramethylene diisocyanate, hexamethylene diisocyanate, ω,ω'-diisocyanatodimethylbenzene, ω,ω'-diisocyanatodimethylcyclohexane, lysine diisocyanate, dicyclohexylmethane diisocyanate, tetramethylxylene diisocyanate, and dimers and trimers of these isocyanates, and triisocyanates obtained by addition of 3 moles of diisocyanates to triols such as trimethylolpropane, and so forth.

"Active hydrogen compound", which is other constituent, denotes polyols or polyamines having on the average 2 to 5 of active hydrogen groups per molecule and 30 to 3000 to the average molecular weight per active hydrogen group, or mixtures thereof, and as examples of such compounds, there may be mentioned:

(1) Low molecular weight diols or triols such as ethylene glycol, propylene glycol, 1,4-butanediol,

hexamethylene glycol, 1,4-cyclohexanediol, triisopropanolamine, trimethylolpropane and glycerol,

(2) Polyalkylene glycols, such as polyoxyethylene glycol, polyoxypropylene glycol, glycols of polyoxyethylenepolyoxypropylene copolymers and polyoxytetramethylene glycol,

(3) Polymers from alkylene oxides such as ethylene oxide and propylene oxide with low-molecular-weight triols such as glycerine, trimethylolpropane and 1,2,6-hexanetriol or low-molecular-weight tetrols such as erythritol and pentaerythritol,

(4) Polyester polyols from low molecular weight polyols and low molecular weight polycarboxylic acids, whereby suitable polyols include ethylene glycol, propylene glycol, 1,4- and 1,3-butanediols, 1,6-hexanediol, etc., and preferred polycarboxylic acids include adipic acid, succinic acid, maleic acid, phthalic acid, terephthalic acid, etc.

(5) Ring-opening polymerization products of cyclic esters such as polycaprolactone and polybutyrolactone,

(6) Castor oil inclusive of hydrogenated castor oil such as mono or diricinoleate of mono, di- or triethylene glycol, mono-, di- or triricinoleate of 1,2,6-hexanetriol or trimethylolpropane and mono-, di-, tri- or tetraricinoleate of pentaerythritol or erythritol, and its related polyols as well as various esters and hemiesters of ricinoleic acid with polyhydric alcohols, and

(7) Polyamines such as ethylenediamine, propylenediamine, tetramethylenediamine, p-phenylenediamine, 2,4-diaminotoluene, methylenebis-4,4′-diaminobenzene and 4,4′-methylene-bis-p-chloroaniline.

As the colloidal silica, use can be made of any type of commercially available one, and there may be mentioned, for example, Aerosil-200®, Aerosil-300®, R-812®, RX-200®, RY-200® and R-972® (all are produced by Nippon Aerosil of Japan).

The siloxane compound having a polyoxyethylene chain which is furthermore used in the present invention includes polysiloxanes or alkoxysilanes having not less than one polyoxyethylene chain in the molecule. Said siloxane compounds have a molecular weight in the range of 500 to 30,000. The proportion in which the oxyethylene chain is contained in such siloxane comound is in the range of 30 to 95 weight %, preferably in the range of 40 to 90 weight %. The average degree of polymerization for one polyoxyethylene chain in the molecule is desirably within the range of 2 to 150, more desirably within the range of 5 to 60.

In the present invention, in addition, advantageous use can be made of siloxane compounds having a block copolymer chain of polyoxyethylene with other polyoxyalkylene. For example, a siloxane compound having a polyoxyethylenepolyoxypropylene block polymer chain in some instances conferes liquidity on the compounds, in contrast with a siloxane compound having merely a polyoxyethylene chain.

These siloxane compounds having polyoxyethylene chain can each be synthesized by *per se* known methods, such as the methods as described in JP—A—46038264, JP—A—46021754, JP—A—51021754 and JP—A—53008360, etc.

Typical examples of the polysiloxane compound having polyoxyethylene chain, which is useful in the present invention, include compounds of the formula (I):

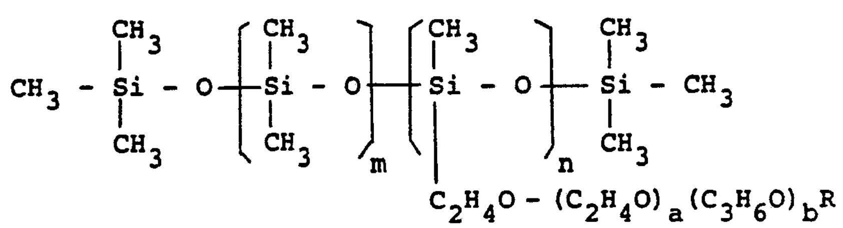

(I)

wherein m is an integer of 0 to 40; n is an integer of 2 to 50; a is an integer of 2 to 150; b is an integer of 0 to 20; R is hydrogen or lower alkyl and compounds of the formula (II):

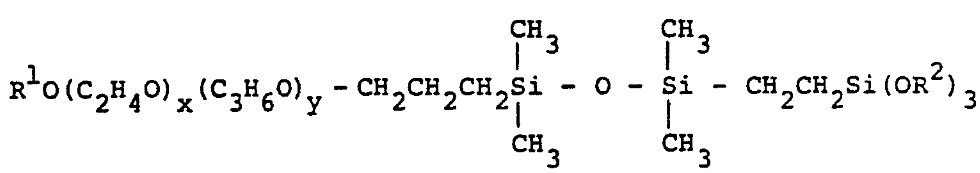

(II)

wherein x is an integer of 5 to 100; y is an integer of 0 to 20; $R^1$ is hydrogen or lower alkyl; $R^2$ is a lower alkyl group.

The proportion in which colloidal silica is incorporated into the composition of the present invention is preferably 0.5 to 50 parts by weight against 100 parts by weight of polyurethane prepolymer, particularly preferably 1.0 to 20 parts by weight.

The ratio of the siloxane compound having a polyoxyethylene chain to be used in the composition of

the present invention is desirably 0.1 to 50 parts by weight against 100 parts by weight of colloidal silica, more desirably 1 to 20 parts by weight.

There may be added to the composition of the present invention, as the case may be, solvents such as toluene, xylene, ethyl acetate, methyl ethyl ketone and ligroin, inorganic fillers such as calcium carbonate, talc, clay and silica, pigments such as titanium oxide, phthalocyanine blue, iron oxide, chrome yellow, ultramarine blue and carbon, plasticizers used for urethanes such as dioctyl phthalate, dioctyl adipate, tricresyl phosphate and liquid petroleum resin, antioxidants, ultraviolet absorbers and a variety of catalysts for urethanes.

Example 1

By reacting 639 parts by weight of polyoxypropylene glycol having a molecular weight of 2000, 213 parts by weight of polyoxypropylene triol having a molecular weight of 3000 with 148 parts by weight of a mixture of 2,4-tolylene diisocyanate and 2,6-tolylene diisocyanate (80:20) in a stream of nitrogen at 80°C for 6 hours, there was obtained a polyurethane prepolymer having an isocyanate group content of 3.56%. The product was referred to as "Urethane Prepolymer (A)".

To 100 parts by weight of Polyurethane Prepolymer (A) as obtained above were added 5 parts by weight of colloidal silica (Aerosil 200®, produced by Nippon Aerosil Co., Ltd.) and 0.5 part by weight each of the thixotropy imparting agents A to I described in Table 1, and kneading was carried out with a vacuum kneader at 60°C for 1 hour to yield a composition in the form of paste or grease, respectively. These compositions were subjected to slump test in accordance with JIS A-5758, whereby the results as shown in Table 1 were obtained.

Table 1

| Silane compound having a polyoxyethylene chain represented by the formula (I) | | | | | | | | | Slump |
|---|---|---|---|---|---|---|---|---|---|
| Sign of sample | m | n | a | b | R | Average molecular weight | Average molecular weight of a polyoxyethylene chain | Content of polyoxyethylene chain (%) | (m/m) |
| A | 10 | 5 | 17 | 0 | H | 5,164 | 748 | 72.4 | 0 |
| B | 10 | 5 | 10 | 0 | $CH_3$ | 3,705 | 440 | 59.4 | 0 |
| C | 25 | 5 | 10 | 0 | H | 4,735 | 440 | 46.5 | 0 |
| D | 0 | 40 | 10 | 0 | H | 21,928 | 440 | 80.3 | 0 |
| E | 5 | 3 | 10 | 0 | H | 2,165 | 440 | 61.0 | 0 |
| F | 10 | 5 | 34 | 0 | H | 8,904 | 1,500 | 84.2 | 0 |
| G | 10 | 5 | 57 | 0 | H | 13,964 | 2,500 | 89.5 | 0 |
| H | 10 | 5 | 34 | 3 | H | 9,774 | 1,500 | 76.7 | 0 |
| I | 5 | 3 | 17 | 2 | H | 3,437 | 748 | 65.3 | 0 |

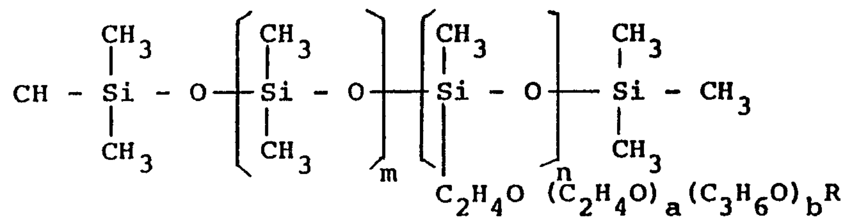

(I)

Example 2

By reacting 590 parts by weight of polyoxypropylene glycol having a molecular weight of 3000, 295 parts by weight of polyoxypropylene triol having a molecular weight of 4500 with 115 parts by weight of 4,4'-diisocyanatodiphenylmethane in a stream of nitrogen at 80°C for 4 hours, there was obtained a prepolymer having an isocyanate group content of 1.38%. The product was referred to as "Urethane Prepolymer (B)".

To 100 parts by weight of Prepolymer (B) as obtained in the above were added 60 parts by weight of dioctyl phthalate, 8 parts by weight of colloidal silica (Aerosil 200®, produced by Nippon Aerosil Co., Ltd.) and 0.8 part by weight each of the thixotropy imparting agents J to N described in Table 2 and kneading was carried out with a vacuum kneader at 60°C for 1 hour to yield a composition in the form of paste or grease, respectively. These compositions were subjected to slump test in accordance with JIS A-5758, whereby the results as shown in Table 2 were obtained.

Table 2

| Silane compound having a polyoxyethylene chain represented by the formula (II) | | | | | | | | Slump |
|---|---|---|---|---|---|---|---|---|
| Sign of sample | a' | b' | $R^1$ | $R^2$ | Average molecular weight | Average molecular weight of a polyoxyethylene chain | Content of polyoxyethylene chain (%) | (m/m) |
| J | 15 | 0 | H | $CH_3$ | 1,000 | 860 | 66.0 | 0 |
| K | 34 | 0 | $CH_3$ | $CH_3$ | 1,850 | 1,500 | 81.1 | 0 |
| L | 15 | 0 | H | $C_2H_5$ | 1,042 | 660 | 63.3 | 0 |
| M | 55 | 5 | $CH_3$ | $CH_3$ | 3,064 | 2,420 | 79.0 | 0 |
| N | 15 | 0 | $CH_3$ | $C_2H_5$ | 1,056 | 660 | 62.5 | 0 |

$$R^1O(C_2H_4O)_{a'}(C_3H_6O)_{b'}CH_2CH_2CH_2\underset{CH_3}{\overset{CH_3}{Si}} - O - \underset{CH_3}{\overset{CH_3}{Si}} - CH_2CH_2Si(OR^2)_3$$

(II)

Example 3

To 100 parts by weight of Prepolymer (B) as prepared in Example 2 were added 60 parts by weight of dioctyl adipate, 40 parts by weight of calcium carbonate (Escalon 200®, produced by Sankyo Seifun Co. of Japan), 9 parts by weight of titanium oxide (R-820®, produced by Ishihara Sangyo Kaisha of Japan), 8 parts by weight of colloidal silica (Aerosil 200®, produced by Nippon Aerosil), and 0.8 part by weight each of the thixotropy imparting agents A to N, and stirring was effected in a vacuum kneader at 60°C for 1 hour, respectively. The resultant compositions were subjected to slump test in accordance with JIS A-5758, whereby they all showed the satisfactory result of 0 mm in slump.

Reference Example 1

To 100 parts by weight of Prepolymer (B) as prepared in Example 2 were added 60 parts by weight of dioctyl adipate, 40 parts by weight of calcium carbonate (Escalon, produced by Sankyo Seifun Co. of Japan), 9 parts by weight of titanium oxide (R-820®, produced by Ishihara Sangyo Kaisha of Japan) and 8 parts by weight of colloidal silica (Aerosil-200®, produced by Nippon Aerosil Co., Ltd.), and kneading was carried out in a vacuum kneader at 60°C for 1 hour. Furthermore, 0.8 part by weight of polyoxyethylene glycol (average molecular weight of 1000, produced by Sanyo Chemical Industries Ltd. of Japan) as a thixotropy imparting agent was added to the mixture, followed by kneading with a vacuum kneader. The samples taken after kneading for different periods of time of 5, 10 and 30 minutes after the addition of polyoxyethylene glycol were each subjected to slump test in accordance with JIS A-5758, whereby the samples being kneaded for 5 and 10 minutes showed the slump of 3 mm and 15 mm, respectively, while the sample kneaded for 30 minutes almost lost thixotropy and fell down.

Reference Example 2

To 100 parts by weight of Prepolymer (B) as prepared in Example 2 were added 60 parts by weight of dioctyl adipate, 40 parts by weight of calcium carbonate (Escalon 200®, produced by Sankyo Seifun Co., Ltd. of Japan), 9 parts by weight of titanium oxide (R-820®, produced by Ishihara Sangyo Kaisha of Japan), 8 parts by weight of colloidal silica (Aerosil 200®, produced by Nippon Aerosil Co., Ltd.) and 3 parts by weight of polyoxyethylene glycol (average molecular weight of 20,000, produced by Wako Pure Chemicals Industries Ltd. of Japan) as well as 1 part by weight of alkyl-modified polysiloxane (SH-203®, produced by Toray Silicone Co., Ltd. of Japan), and stirring was effected in a vacuum kneader at 60°C for 1 hour. The resultant composition was subjected to slump test in accordance with JIS A-5758, whereby it hardly showed thixotropy and fell down.

**Claims**

1. A thixotropic polyurethane resin composition which comprises .

(1) a polyurethane prepolymer having an average molecular weight ranging from 500 to 10.000, formed by polymerization of polyisocyanates and active hydrogen compounds at an equivalent ratio of NCO group to active hydrogen group ranging preferably from 1.02:1.0 to 5.0:1.0 in the form of liquid or solution,

(2) colloidal silica and

(3) siloxane compounds having a molecular weight from 500 to 30.000 which have an oxyethylene chain proportion from 30 to 95% by weight.

2. A composition claimed in Claim 1, wherein the proportion of the colloidal silica against 100 parts by weight of the polyurethane prepolymer is 0.5 to 50 parts by weight and the proportion of the siloxane compound against 100 parts by weight of colloidal silica is 0.1 to 50 parts by weight.

3. A composition claimed in Claim 1, wherein the proportion of the colloidal silica against 100 parts by weight of the polyurethane prepolymer is 1.0 to 20 parts by weight and the proportion of the siloxane compound against 100 parts by weight of colloidal silica is 1 to 20 parts by weight.

4. A composition claimed in Claim 1, wherein a siloxane compound is one having polyoxyethylene chain in the proportion ranging from 40 to 90 weight percent per molecule.

5. A composition claimed in Claim 1, wherein a siloxane compound is one represented by the formula (I):

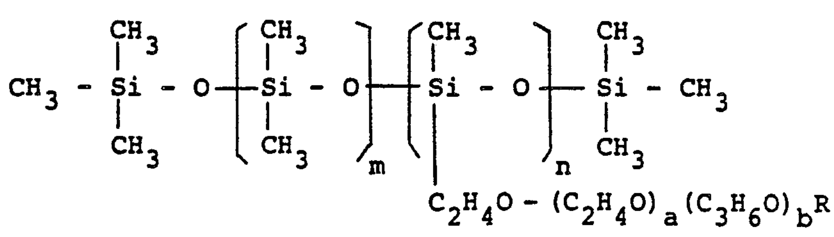

(I)

wherein m is an integer of 0 to 40; n is an integer of 2 to 50; a is an integer of 2 to 150; b is an integer of 0 to 20; R is hydrogen or lower alkyl.

6. A composition claimed in Claim 1, wherein a siloxane compound is one represented by the formula (II):

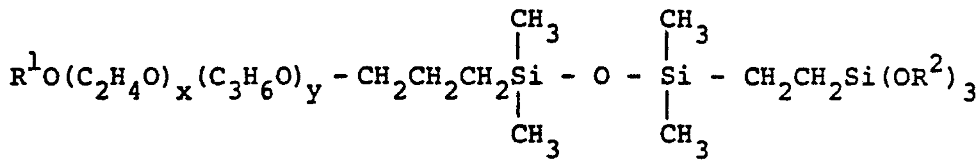

(II)

wherein x is an integer of 5 to 100; y is an integer of 0 to 20; $R^1$ is hydrogen or lower alkyl; $R^2$ is a lower alkyl group.

**Patentansprüche**

1. Thixotrope Polyurethan-Harz-Zusammensetzung, umfassend

(1) ein Polyurethan-Prepolymer mit einem mittleren Molekulargewicht im Bereich von 500 bis 10 000, das durch Polymerisation von Polyisocyanaten und Verbindungen mit aktivem Wasserstoff in einem Äquivalenz-Verhältnis der NCO-Gruppe zu der aktiven Wasserstoff-Gruppe vorzugsweise im Bereich von 1,02:1,0 bis 5,0:1,0 gebildet ist, in Form einer Flüssigkeit oder Lösung,

(2) kolloidales Siliciumdioxid und

(3) Siloxan-Verbindungen mit einem Molekulargewicht von 500 bis 30 000, die einen Anteil an Oxyethylen-Ketten von 30 bis 95 Gew.-% aufweisen.

2. Zusammensetzung nach Anspruch 1, worin das Verhältnis des kolloidalen Siliciumdioxids zu 100 Gew.-Teilen des Polyurethan-Prepolymers 0,5 bis 50 Gew.-Teile beträgt und das Verhältnis der Siloxan-Verbindung zu 100 Gew.-Teilen des kolloidalen Siliciumdioxids 0,1 bis 50 Gew.-Teile beträgt.

3. Zusammensetzung nach Anspruch 1, worin das Verhältnis des kolloidalen Siliciumdioxids zu 100 Gew.-Teilen des Polyurethan-Prepolymers 1,0 bis 20 Gew.-Teile beträgt und das Verhältnis der Siloxan-Verbindung zu 100 Gew.-Teilen des kolloidalen Siliciumdioxids 1 bis 20 Gew.-Teile beträgt.

4. Zusammensetzung nach Anspruch 1, worin die Siloxan-Verbindung eine solche mit einem Anteil an Oxyethylen-Ketten von 40 bis 90 Gew.-% pro Molekül ist.

5. Zusammensetzung nach Anspruch 1, worin die Siloxan-Verbindung eine solche der Formel (I)

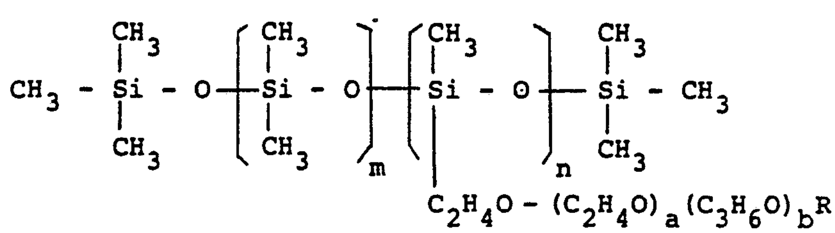

(I)

ist, in der m eine ganze Zahl von 0 bis 40 ist, n eine ganze Zahl von 2 bis 50 ist, a eine ganze Zahl von 2 bis 150 ist, b eine ganze Zahl von 0 bis 20 ist und R Wasserstoff oder Niederalkyl ist.

6. Zusammensetzung nach Anspruch 1, worin die Siloxan-Verbindung eine solche der Formel (II)

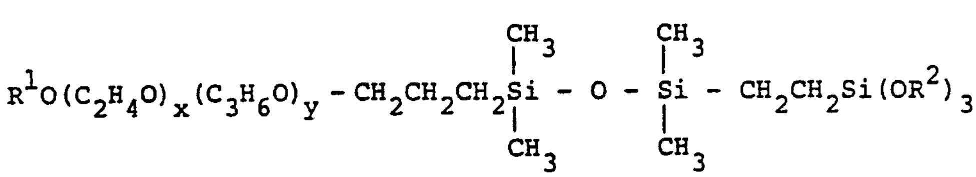

(II)

ist, in der X eine ganze Zahl von 5 bis 100 ist, Y eine ganze Zahl von 0 bis 20 ist, $R^1$ Wasserstoff oder Niederalkyl ist und $R^2$ eine Niederalkyl-Gruppe ist.

**Revendications**

1. Composition thixotrope de résine de polyuréthane, qui comprend:

(1) un prépolymère polyuréthane présentant une masse moléculaire moyenne comprise entre 500 et 10 000, formé par polymérisation de polyisocyanates et de composés à hydrogène actif, pour un rapport

d'équivalents, du groupe NCO au groupe à hydrogène actif, compris de préférence entre 1,02:1,0 et 5,0:1,0, sous forme d'un liquide ou d'une solution,

(2) de la silice colloïdale, et

(3) des composés siloxane ayant une masse moléculaire comprise entre 500 et 30 000 et comportant une proportion de chaîne oxyéthylène comprise entre 30 et 95% en poids.

2. Composition selon la revendication 1, dans laquelle la proportion de silice colloïdale, pour 100 parties en poids du prépolymère polyuréthane, est de 0,5 à 50 parties en poids, et la proportion du composé siloxane, pour 100 parties en poids de silice colloïdale, est de 0,1 à 50 parties en poids.

3. Composition selon la revendication 1, dans laquelle la proportion de silice colloïdale, pour 100 parties en poids du prépolymère polyuréthane, est comprise entre 1,0 et 20 parties en poids, et la proportion du composé siloxane, pour 100 parties en poids de silice colloïdale, est comprise entre 1 et 20 parties en poids.

4. Composition selon la revendication 1, dans laquelle le composé siloxane est un composé comportant une chaîne polyoxyéthylène en une proportion comprise entre 40 et 90% en poids par molécule.

5. Composition selon la revendication 1, dans laquelle le composé siloxane est un composé répondant à la formule (I):

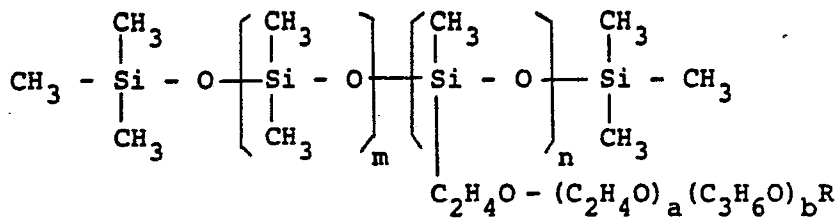

(I)

dans laquelle *m* est un nombre entier de 0 à 40; *n* est un nombre entier de 2 à 50; *a* est un nombre entier de 2 à 150; *b* est un nombre entier de 0 à 20; R est un atome d'hydrogène ou un groupe alkyle inférieur.

6. Composition selon la revendication 1, dans laquelle le composé siloxane est un composé répondant à la formule (II):

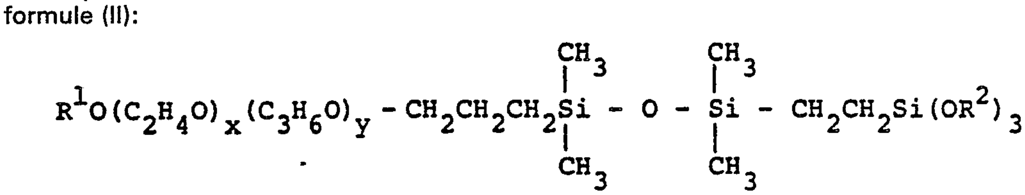

(II)

dans laquelle $x$ est un nombre entier de 5 à 100; $y$ est un nombre entier de 0 à 20; $R^1$ est un atome d'hydrogène ou un groupe alkyle inférieur; $R^2$ est un groupe alkyle inférieur.